# EUROPÄISCHE PATENTANMELDUNG

(11) **EP 4 737 866 A1**
(43) Veröffentlichungstag der Anmeldung: **06.05.2026**
(21) Anmeldenummer: 25207780.5
(22) Anmeldetag: 09.10.2025
(51) Int. Cl.: G01F 1/66, G01F 1/667, G01F 25/10

(54) **VERFAHREN ZUM BETREIBEN EINES ULTRASCHALLDURCHFLUSSMESGERÄTS UND ULTRASCHALLDURCHFLUSSMESGERÄT**

(30) Priorität: 28.10.2024 DE 102024131387
(71) Anmelder: Krohne Messtechnik GmbH, 47058 Duisburg (DE)
(72) Erfinder: Kunze, Johannes, 45468 Mülheim (DE); Demski, Christian, 21614 Buxtehude (DE)
(74) Vertreter: Gesthuysen Patentanwälte

(57) **Zusammenfassung**

Beschrieben und dargestellt ist ein Verfahren (1) zum Betreiben eines Ultraschalldurchflussmessgeräts (2), wobei das Ultraschalldurchflussmessgerät (2) wenigstens ein erstes Ultraschallwandlerpaar (3) und ein zweites Ultraschallwandlerpaar (6) aufweist, wobei das erste Ultraschallwandlerpaar (3) derart an einem Messrohr (4) angeordnet ist, dass zwischen den Ultraschallwandlern (8, 9) des ersten Ultraschallwandlerpaars (3) ein erster Messpfad (5) mit einer Länge L1 aufgespannt wird und wobei das zweite Ultraschallwandlerpaar (6) derart an dem Messrohr (5) angeordnet ist, dass zwischen den Ultraschallwandlern (8, 10, 11) des zweiten Ultraschallwandlerpaars (6) ein zweiter Messpfad (7) mit einer Länge L2 aufgespannt wird, und wobei das Ultraschalldurchflussmessgerät (2) eine Steuer- und Auswerteeinheit (18) zur Ansteuerung der Ultraschallwandler (8, 9, 10, 11) und zur Auswertung der von den Ultraschallwandlern (8, 9, 10, 11) erfassten Messsignale aufweist.

## Beschreibung

Die Erfindung geht aus von einem Verfahren zum Betreiben eines Ultraschalldurchflussmessgeräts,
wobei das Ultraschalldurchflussmessgerät wenigstens ein erstes Ultraschallwandlerpaar und ein zweites Ultraschallwandlerpaar aufweist,
wobei das erste Ultraschallwandlerpaar derart an einem Messrohr angeordnet ist, dass zwischen den Ultraschallwandlern des ersten Ultraschallwandlerpaars ein erster Messpfad mit einer Länge L1 aufgespannt wird und
wobei das zweite Ultraschallwandlerpaar derart an dem Messrohr angeordnet ist, dass zwischen den Ultraschallwandlern des zweiten Ultraschallwandlerpaars ein zweiter Messpfad mit einer Länge L2 aufgespannt wird,
und wobei das Ultraschalldurchflussmessgerät eine Steuer- und Auswerteeinheit zur Ansteuerung der Ultraschallwandler und zur Auswertung der von den Ultraschallwandlern erfassten Messsignale aufweist.

Darüber hinaus betrifft die Erfindung ein entsprechendes Ultraschalldurchflusmessgerät umfassend wenigstens ein erstes Ultraschallwandlerpaar und ein zweites Ultraschallwandlerpaar,
wobei das erste Ultraschallwandlerpaar derart an einem Messrohr angeordnet ist, dass zwischen den Ultraschallwandlern des ersten Ultraschallwandlerpaars ein erster Messpfad der Länge L1 aufgespannt wird und
wobei das zweite Ultraschallwandlerpaar derart an dem Messrohr angeordnet ist, dass zwischen den Ultraschallwandlern des zweiten Ultraschallwandlerpaars ein zweiter Messpfad der Länge L2 aufgespannt wird,
und wobei das Ultraschalldurchflussmessgerät eine Steuer- und Auswerteeinheit zur Ansteuerung der Ultraschallwandler und zur Auswertung der von den Ultraschallwandlern erfassten Messsignale aufweist.

Aus dem Stand der Technik ist es bekannt, zur Überwachung oder Überprüfung der korrekten Funktionsweise eines Ultraschalldurchflussmessgeräts bzw. der korrekten Funktionsweise der Ultraschallwandler die Laufzeit von Messsignalen auf unterschiedlichen Messpfaden miteinander zu vergleichen.

Beispielsweise ist aus dem Stand der Technik DE 10 2018 118489 A1 ist ein Verfahren zum Betreiben einer Ultraschallmessvorrichtung zur Erfassung der Strömungsgeschwindigkeit eines strömenden Mediums bekannt, bei dem während einer Messung wenigstens ein zusätzlicher Parameter erfasst wird und bei dem auf Grundlage dieses zusätzlichen Parameters eine Plausibilitätsprüfung für eine jeweilige, aus dem Ultraschallsignal ermittelte Laufzeit durchgeführt wird. Ein solcher zusätzlicher Parameter wird beispielsweise aus einem zeitlich vor und/oder nach dem eigentlichen Ultraschallsignal eintreffenden Nebensignal gewonnen. Alternativ kann ein zusätzlicher Parameter die Intensität oder die Pulsform des Empfangssignals sein.

Die Druckschrift EP 2 592 395 A1 betrifft ein Verfahren zum Betreiben eines Ultraschalldurchflussmessgeräts, das mehrere Messpfade aufweist, wobei die Genauigkeit der Durchflussmessung durch einen Vergleich der unterschiedlichen Messpfade miteinander verbessert wird.

Die Druckschrift WO2013006090 A1 beschreibt ein Kalibrierverfahren für ein Ultraschalldurchflussmessgerät, wobei in einem nicht fließenden Medium die Ultraschallgeschwindigkeit bestimmt und mit einem Referenzwert für das Medium verglichen wird.

Ausgehend von dem dargelegten Stand der Technik ist es Aufgabe der Erfindung, ein Verfahren zum Betreiben eines Ultraschalldurchflussmessgeräts anzugeben, das eine besonders zuverlässige Überprüfung der Funktionsfähigkeit der einzelnen Ultraschallwandler realisiert.

Zudem ist es Aufgabe der Erfindung, ein Ultraschalldurchflussmessgerät anzugeben, das eine besonders hohe Zuverlässigkeit aufweist.

Gemäß einer ersten Lehre der vorliegenden Erfindung ist die zuvor genannte Aufgabe durch ein eingangs beschriebenes Verfahren dadurch gelöst, dass das Verfahren die folgenden Schritte umfasst:
- Aussenden und Empfang von zumindest einem ersten Messsignal entlang des ersten Messpfads in und/oder entgegen der Strömungsrichtung eines durch das Messrohr fließenden Mediums durch das erste Ultraschallwandlerpaar,
- Bestimmung, ob die Strömungsgeschwindigkeit des Mediums unterhalb von einem festgelegten Geschwindigkeitsgrenzwert liegt,
- Bestimmung eines Werts von einen Vergleichsparameter aus dem ersten Messsignal und Bestimmung eines Erwartungswertes für den Vergleichsparameter auf dem zweiten Messpfad basierend auf dem Wert des Vergleichsparameters, der auf dem ersten Messpfad bestimmt wurde,
- sofern die Strömungsgeschwindigkeit unterhalb von dem festgelegten Geschwindigkeitsgrenzwert liegt:
   - Aussenden und Empfang von zumindest einem zweiten Messsignal entlang des zweiten Messpfads in und/oder entgegen der Strömungsrichtung eines durch das Messrohr fließenden Mediums durch das zweite Ultraschallwandlerpaar,
   - Bestimmung des zweiten Vergleichsparameters aus dem zweiten Messsignal,
   - Plausibiliätsprüfung durch Vergleich des zweiten Vergleichsparameters mit seinem Erwartungswert.

Erfindungsgemäß wurde erkannt, dass eine Plausibilitätsprüfung der Funktionsweise der Ultraschallwandler besonders vorteilhaft dann durchgeführt werden kann, wenn kein oder fast kein Durchfluss des Mediums durch das Messrohr vorliegt. Eine solche Situation weist den Vorteil auf, dass im Messrohr kein Strömungsprofil, das im Verlauf des Strömungsquerschnitts unterschiedliche Geschwindigkeitskomponenten aufweist, vorhanden ist.

Somit können Messergebnisse, die auf Messpfaden, die unterschiedliche Bereiche des Strömungsquerschnitts durchlaufen, aufgenommen wurden, unmittelbar miteinander verglichen werden. Im Detail ist es sogar möglich, ausgehend von einem gemessenen Wert eines Vergleichsparameters auf einem ersten Messpfad den Wert dieses Vergleichsparameters auf einem zweiten Messpfad zu bestimmen. Dabei ist insbesondere die Länge der Messpfade L1 und L2 zu berücksichtigen.

Das Medium weist in dem erfindungsgemäßen Zustand über den kompletten Strömungsquerschnitt die gleiche Strömungsgeschwindigkeit auf, womit bezüglich der Bestimmung des Erwartungswertes des Vergleichsparameters für den zweiten Messpfad keine Unbekannten in die Bestimmung miteingehen. Die Strömungsgeschwindigkeit ist in dem erfindungsgemäßen Zustand entweder sehr langsam. Alternativ kann auch der Zustand festgestellt werden, in dem das Medium ruht, also keine Strömungsgeschwindigkeit vorliegt.

Aufgrund der auf den unterschiedlichen Messpfaden vorhandenen gleichen Prozessbedingungen können die Werte der Vergleichsparameter unmittelbar miteinander verglichen und auch ineinander umgerechnet werden.

So ist es möglich, nicht nur gemessene Werte mit theoretischen Referenzwerten zu vergleichen. Vielmehr können auf unterschiedlichen Messpfaden aufgenommene Messwerte miteinander verglichen werden, womit eine Überprüfung einer korrekten Funktionsfähigkeit der Ultraschallwandler besonders vorteilhaft durchgeführt werden kann.

Das erste Messsignal kann ein einfaches Messsignal sein, das von einem Ultraschallwandler in Strömungsrichtung zu einem zweiten Ultraschallwandler ausgesendet wird.

Alternativ kann das erste Messsignal ein einfaches Messsignal sein, das von einem Ultraschallwandler entgegen der Strömungsrichtung zu einem zweiten Ultraschallwandler ausgesendet wird.

Alternativ kann das erste Messsignal sich zusammensetzen aus einem ersten Teilmesssignal, das von einem ersten Ultraschallwandler in Strömungsrichtung zu einem zweiten Wandler ausgesendet wird und aus einem zweiten Teilmesssignal, das von dem zweiten Ultraschallwandler entgegen der Strömungsrichtung zu dem ersten Ultraschallwandler ausgesendet wird.

Je nach Ausgestaltung des ersten Messsignals kann auf unterschiedliche Weise bestimmt werden, ob die Strömungsgeschwindigkeit des Mediums unterhalb der Grenzgeschwindigkeit liegt. Verschiedene Möglichkeiten werden nachfolgend beschrieben.

Gemäß einer vorteilhaften Ausgestaltung des Verfahrens umfasst das erste Messsignal ein erstes Teilmesssignal, das den ersten Messpfad in Strömungsrichtung durchläuft und ein zweites Teilmesssignal, das den ersten Messpfad entgegen der Strömungsrichtung durchläuft. Zur Bestimmung, ob die Strömungsgeschwindigkeit unter dem Geschwindigkeitsgrenzwert liegt, wird die Laufzeitdifferenz zwischen dem ersten Teilmesssignal und dem zweiten Teilmesssignal bestimmt. Weiterhin wird überprüft, ob die Laufzeitdifferenz unter einem Differenzgrenzwert liegt. Liegt die Laufzeitdifferenz unter dem Differenzgrenzwert, so liegt die Strömungsgeschwindigkeit unter dem Geschwindigkeitsgrenzwert. Damit ist sie ausreichend klein für die Durchführung der erfindungsgemäßen Plausibilitätsprüfung.

Gemäß einer Ausgestaltung kennzeichnet der Geschwindigkeitsgrenzwert die Geschwindigkeit, bei der das Strömungsprofil in ein Strömungsprofil übergeht, das über den Strömungsquerschnitt eine Geschwindigkeitsverteilung aufweist. Unterhalb des Geschwindigkeitsgrenzwerts weist das Medium eine gleichförmige Strömung auf, besitzt also keine Geschwindigkeitsverteilung über den Strömungsquerschnitt betrachtet.

Gemäß einer weiteren Ausgestaltung ist der Geschwindigkeitsgrenzwert derart klein, dass das Medium, selbst wenn es mit einer Geschwindigkeit, die etwas oberhalb des Geschwindigkeitsgrenzwertes liegt, fließt, noch ein gleichförmiges Strömungsprofil ohne Geschwindigkeitsverteilung aufweist.

Gemäß einer nächsten Ausgestaltung ist der Geschwindigkeitsgrenzwert derart bemessen, dass die Strömungsgeschwindigkeit nahe Null ist oder Null beträgt.

Gemäß einer nächsten vorteilhaften Ausgestaltung des Verfahrens ist das erste Messsignal ein einfaches Messsignal, das den ersten Messpfad in oder entgegen der Strömungsrichtung durchläuft. Zur Bestimmung, ob die Strömungsgeschwindigkeit unter dem Geschwindigkeitsgrenzwert liegt, wird die absolute Laufzeit des ersten Messignals zwischen den Ultraschallwandlern des ersten Ultraschallwandlerpaars, gegen einen Laufzeitgrenzwert verglichen. Dabei liegt die Strömungsgeschwindigkeit unter dem Geschwindigkeitsgrenzwert, wenn die absolute Laufzeit des ersten Messsignals einen unteren Laufzeitgrenzwert überschreitet oder einen oberen Laufzeitgrenzwert unterschreitet.

Ist das erste Messsignal ein Signal, das entgegen der Strömungsrichtung zu einem zweiten Ultraschallwandler ausgesendet wird, so wird die absolute Laufzeit des ersten Messignals gegen einen oberen Laufzeitgrenzwert verglichen. Liegt die Laufzeit des ersten Messsignals unterhalb von diesem Laufzeitgrenzwert, so liegt die Strömungsgeschwindigkeit unter dem Geschwindigkeitsgrenzwert und ist damit ausreichend klein für die Durchführung der erfindungsgemäßen Plausibilitätsprüfung.

Ist das erste Messsignal ein Signal, das in Strömungsrichtung zu einem zweiten Ultraschallwandler ausgesendet wird, so wird die absolute Laufzeit des ersten Messignals gegen einen unteren Laufzeitgrenzwert verglichen. Liegt die Laufzeit des ersten Messsignals oberhalb von diesem Laufzeitgrenzwert, so liegt die Strömungsgeschwindigkeit unter dem Geschwindigkeitsgrenzwert und ist damit ausreichend klein für die Durchführung der erfindungsgemäßen Plausibilitätsprüfung.

Wird die absolute Laufzeit eines Messignals, das von einem ersten Ultraschallwandler zu einem zweiten Ultraschallwandler ausgesendet wird, zur Bestimmung, ob keine oder fast keine Strömungsgeschwindigkeit vorhanden ist, herangezogen, so wird vorzugsweise wenigstens ein weiterer Betriebsparameter, insbesondere die Temperatur des Mediums und/oder der Druck des Mediums, während des Betriebs des Ultraschalldurchflussmessgeräts bestimmt. Der untere Laufzeitgrenzwert bzw. der obere Laufzeitgrenzwert ist dann abhängig von dem wenigstens einen weiteren Parameter.

Dazu weist das Ultraschalldurchflussmessgerät gemäß einer weiteren vorteilhaften Ausgestaltung zusätzlich einen weiteren Sensor, insbesondere einen Temperatursensor und/oder einen Drucksensor, auf, wobei der Temperatursensor die Temperatur des Mediums misst und/oder wobei der Drucksensor den Druck im Medium misst. Der untere Laufzeitgrenzwert bzw. der obere Laufzeitgrenzwert wird gemäß dieser Ausgestaltung in Abhängig der aktuellen Temperatur und/oder dem aktuellen Druck des Mediums bestimmt.

Ebenfalls bevorzugt ist es, wenn das im Messrohr befindliche Medium bekannt ist. Ist das Medium bekannt, so wird der untere Laufzeitgrenzwert bzw. der obere Laufzeitgrenzwert in Abhängigkeit von dem Medium bestimmt.

Wird gemäß einer der oben beschriebenen Ausgestaltungen festgestellt, dass die Strömungsgeschwindigkeit unterhalb des Geschwindigkeitsgrenzwerts liegt, so wird in einem nächsten Verfahrensschritt eine Plausibilitätsprüfung der mit dem zweiten Ultraschallwandlerpaar erfassten Messwerte und der mit dem ersten Ultraschallwandlerpaar erfassten Messwerte durchgeführt.

Dazu wird aus dem ersten Messsignal ein Wert eines Vergleichsparameter bestimmt. Basierend auf diesem Wert des Vergleichsparameters wird ein Erwartungswert für den Vergleichsparameter auf dem zweiten Messpfad bestimmt.

Dieser Erwartungswert muss nicht mit jeder Durchführung des Verfahrens neu bestimmt werden. Ist beispielsweise der Geschwindigkeitsgrenzwert so niedrig, dass die Plausibilitätsprüfung nur bei einer Situation durchgeführt wird, in der kein Durchfluss vorliegt, so kann der Wert des Vergleichsparameters für den zweiten Messpfad auch in der Steuer- und Auswerteeinheit hinterlegt sein. In diesem Fall entspricht der Erwartungswert diesem hinterlegten Wert.

Gemäß einer Ausgestaltung ist der Vergleichsparameter für die Plausibiliätsprüfung die absolute Laufzeit eines Messsignals zwischen zwei Ultraschallwandlern eines Ultraschallwandlerpaars.

Gemäß einer weiteren Ausgestaltung ist der Vergleichsparameter die Laufzeitdifferenz zwischen einem, einen Messpfad in Strömungsrichtung durchlaufenden Teilmesssignals und einem, einen Messpfad entgegen der Strömungsrichtung durchlaufenden Teilmesssignals.

Ist die Länge L1 des ersten Messpfades um einen bekannten Wert größer oder kleiner als die Länge L2 des zweiten Messpfades, wird bei der Bestimmung des Erwartungswertes des Vergleichsparameter für den zweiten Messpfad der Längenunterschied berücksichtigt.

Entspricht die Länge L1 des ersten Messpfades der Länge L2 des zweiten Messpfades, entspricht bei Vorliegen von keiner oder fast keiner Strömungsgeschwindigkeit der Erwartungswert des Vergleichsparameters für den zweiten Messpfad im Wesentlichen dem Wert des Vergleichsparameters für den ersten Messpfad.

Gemäß einer weiteren Ausgestaltung des Verfahrens ist wenigstens ein weiterer Vergleichsparameter das Frequenzspektrum des von einem Ultraschallwandler empfangenen Messsignals und/oder das Signal-zu-Rausch-Verhältnis des von einem Ultraschallwandler empfangenen Messsignals ist. Diese Vergleichsparameter sind nicht oder nicht wesentlich abhängig von der Länge der Messspfade. Der Erwartungswert für den zweiten Messpfad dieser Vergleichsparameter entspricht damit dem auf dem ersten Messpfad gemessenen Wert insbesondere unter Berücksichtigung von üblichen Toleranzen.

Gemäß einer weiteren Ausgestaltung des Verfahrens sind mehr als zwei Messpfade vorhanden.

Gemäß dieser Ausgestaltung kann ausgehend von dem auf dem ersten Messpfad gemessenen Wert des Vergleichsparameters ein Erwartungswert für den zweiten Messpfad sowie für den dritten Messpfad bestimmt werden.

Zur Plausibilitätsprüfung kann der auf dem zweiten Messpfad bestimmte Wert des Vergleichsparameters mit seinem Erwartungswert verglichen werden. Zudem kann der auf dem dritten Messpfad bestimmte Wert des Vergleichsparameters mit seinem Erwartungswert verglichen werden.

Insgesamt gewährleisten die beschriebenen Ausgestaltungen des Verfahrens eine besonders sichere Überprüfung der korrekten Funktionsweise der einzelnen Ultraschallwandler.

Gemäß einer zweiten Lehre der vorliegenden Erfindung wird die eingangs genannte Aufgabe durch ein eingangs beschriebenes Ultraschalldurchflussmessgerät dadurch gelöst, dass die Steuer- und Auswerteeinheit im Betrieb eines der zuvor beschriebenen Verfahren durchführt.

Gemäß einer bevorzugten Ausgestaltung umfasst das erste Ultraschallwandlerpaar einen ersten Ultraschallwandler und einen zweiten Ultraschallwandler und das zweite Ultraschallwandlerpaar umfasst einen dritten Ultraschallwandler und einen vierten Ultraschallwandler, wobei vorzugsweise sämtliche Ultraschallwandler als Ultraschallsender und als Ultraschallempfänger ausgebildet sind.

Beispielsweise können der erste Ultraschallwandler und der zweite Ultraschallwandler des ersten Ultraschallwandlerpaars in Strömungsrichtung versetzt derart an dem Messrohr angeordnet sein, dass der erste Messpfad das Messrohrinnere ohne Reflektion durchdringt. Alternativ können der erste Ultraschallwandler und der zweite Ultraschallwandler derart in Strömungsrichtung versetzt an dem Messrohr angeordnet sein, dass der erste Messpfad eine Reflexion an der Messrohrinnenwand umfasst, also V-förmig ausgebildet ist. Denkbar ist ebenso, dass der erste Messpfad mehr als eine Reflexion an der Messrohrinnenwand aufweist.

Die Ultraschallwandler des zweiten Ultraschallwandlerpaars können derart in Strömungsrichtung versetzt an dem Messrohr angeordnet sein, dass der zweite Messpfad das Messrohrinnere ohne Reflektion durchdringt. Alternativ können der dritte Ultraschallwandler und der vierte Ultraschallwandler derart in Strömungsrichtung versetzt an dem Messrohr angeordnet sein, dass der zweite Messpfad eine Reflexion an der Messrohrinnenwand aufweist, also V-förmig ausgebildet ist. Denkbar ist ebenso, dass der zweite Messpfad mehr als eine Reflexion an der Messrohrinnenwand aufweist.

Gemäß der zuvor beschriebenen Ausgestaltung weisen das erste Ultraschallwandlerpaar und das zweite Ultraschallwandlerpaar insgesamt vier Ultraschallwandler auf.

Gemäß einer nächsten Ausgestaltung weisen das erste Ultraschallwandlerpaar und das zweite Ultraschallwandlerpaar insgesamt drei Ultraschallwandler auf. Gemäß dieser Ausgestaltung bildet der erste Ultraschallwandler mit dem zweiten Ultraschallwandler ein erstes Ultraschallwandlerpaar und weiterhein bildet der erste Ultraschallwandler mit dem dritten Ultraschallwandler ein zweites Ultraschallwandlerpaar. Besonders bevorzugt ist zumindest der erste Ultraschallwandler gemäß dieser Ausgestaltung als Phased-Array-Wandler ausgebildet.

Gemäß einer weiteren Ausgestaltung entspricht die Länge L1 des ersten Messpfades der Länge L2 des zweiten Messpfades.

Zudem kann die Länge L1 des ersten Messpfades auch um einen bekannten Wert größer oder kleiner ist als die Länge L2 des zweiten Messpfades.

Gemäß einer Ausgestaltung sind der erste Messpfad und der zweite Messpfad in demselben Strömungsabschnitt des strömenden Mediums angeordnet. Gemäß dieser Ausgestaltung vermessen die unterschiedlichen Messpfade denselben Strömungsabschnitt, wobei die unterschiedlichen Messpfade verschiedene Strömungsquerschnittsabschnitte durchlaufen.

Beispielsweise ist das erste Ultraschallwandlerpaar derart an dem Messrohr angeordnet, dass der erste Messpfad das Messrohr mittig, d.h. derart, dass der erste Messpfad die Messrohrachse schneidet, durchläuft. Das zweite Ultraschallwandlerpaar ist oberhalb oder unterhalb des ersten Ultraschallwandlerpaars derart angeordnet, dass es den Strömungsquerschnitt im Randbereich erfasst. Gemäß einer Ausgestaltung ist ein zweites Ultraschallwandlerpaar oberhalb des ersten Ultraschallwandlerpaars und ein drittes Ultraschallwandlerpaar ist unterhalb des ersten Ultraschallwandlerpaars angeordnet.

Dabei sind die Beziehungen "oberhalb" und "unterhalb" jeweils bezogen auf die Messrohrachse und zwar in Draufsicht auf den Messrohrquerschnitt definiert.

Gemäß einer nächsten Ausgestaltung sind der erste Messpfad und der zweite Messpfad in Strömungsrichtung zueinander versetzt angeordnet. Gemäß dieser Ausgestaltung können die Ultraschallwandlerpaare denselben Strömungsquerschnittsbereich erfassen. Beispielsweise vermessen der erste Messpfad und der zweite Messpfad den Strömungsquerschnitt mittig, d.h. beide Messpfade schneiden die Messrohrachse.

Gemäß einer anderen Ausgestaltung sind der erste Messpfad und der zweite Messpfad in Strömungsrichtung versetzt zueinander angeordnet, wobei der erste Messpfad und der zweite Messpfad unterschiedliche Bereiche des Strömungsquerschnitts vermessen. Gemäß dieser Ausgestaltung ist der erste Messpfad vorzugsweise kürzer oder länger ausgebildet als der zweite Messpfad.

Gemäß einer weiteren Ausgestaltung des Ultraschalldurchflussmessgeräts sind wenigstens drei Ultraschallwandlerpaare vorhanden, die im Betrieb zur Sicherstellung einer korrekten Funktionsweise einer erfindungsgemäßen Plausibilitätsprüfung unterzogen werden.

Das erfindungsgemäße Ultraschallsdurchflussmessgerät realisiert verschiedene Messpfade, wobei zur Funktionsüberprüfung der die Messpfade realisierende Ultraschallwandler, auf den Messpfaden gemessene Werte miteinander zumindest mittelbar verglichen werden, wobei sichergestellt ist, dass die grundsätzliche Prozesssituation einen solchen Vergleich auch zulässt.

Es gibt nun eine Vielzahl von Möglichkeiten, das erfindungsgemäße Verfahren und das erfindungsgemäße Durchflussmessgerät auszugestalten und weiterzubilden. Verwiesen wird dazu auf die den unabhängigen Patentansprüchen nachgeordneten Patentansprüche sowie auf die nachfolgend beschriebenen Ausführungsbeispiele in Kombination mit der Zeichnung.

In der Zeichnung zeigen
- Fig. 1: ein Ausführungsbeispiel eines erfindungsgemäßen Verfahrens,
- Fig. 2: ein weiteres Ausführungsbeispiel eines erfindungsgemäßen Verfahrens,
- Fig. 3: ein Ausführungsbeispiel eines erfindungsgemäßen Ultraschalldurchflussmessgeräts,
- Fig. 4: ein weiteres Ausführungsbeispiel eines erfindungsgemäßen Ultraschalldurchflussmessgeräts,
- Fig. 5: ein weiteres Ausführungsbeispiel eines erfindungsgemäßen Ultrsachalldurchflussmessgeräts und
- Fig. 6: ein weiteres Ausführungsbeispiel eines erfindungsgemäßen Ultraschalldurchflussmessgeräts.

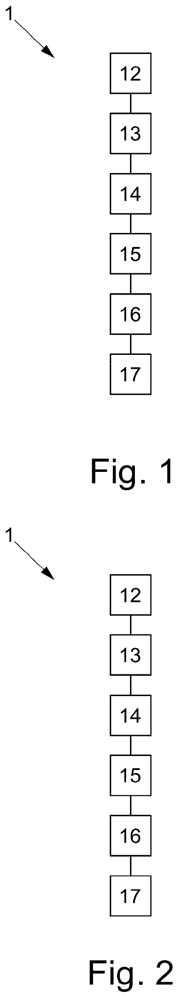

Fig. 1 zeigt ein Ausführungsbeispiel eines Verfahrens 1 zum Betreiben eines Ultraschalldurchflussmessgeräts 2. Dabei weist das Ultraschalldurchflussmessgerät 2 ein erstes Ultraschallwandlerpaar 3 mit einem ersten Ultraschallwandler 8 und einem zweiten Ultraschallwandler 9 auf, wobei das Ultraschallwandlerpaar 3 derart an einem Messrohr 4 angeordnet ist, dass zwischen den Ultraschallwandlern 8, 9 des ersten Ultraschallwandlerpaars 3 ein erster Messpfad 5 aufgespannt wird. Weiterhin weist das Ultraschalldurchflussmessgerät 2 ein zweites Ultraschallwandlerpaar 6 mit einem dritten Ultraschallwandler 10 und einem vierten Ultraschallwandler 11 auf, wobei das zweite Ultraschallwandlerpaar 4 das derart an dem Messrohr 4 angeordnet ist, dass es einen zweiten Messpfad 7 aufspannt.

In einem ersten Schritt 12 des Verfahrens 1 wird von dem ersten Ultraschallwandler 8 des ersten Ultraschallwandlerpaars 3 ein erstes Teilmesssignal ausgesendet, das nach dem Durchlauf durch das Medium von dem zweiten Ultraschallwandler 9 empfangen wird. Weiterhin sendet der zweite Ultraschallwandler 9 ein zweites Teilmesssignal aus, dass nach dem Durchlauf durch das Medium von dem ersten Ultraschallwandler 8 empfangen wird.

In einem nächsten Schritt 13 wird bestimmt, ob die Strömungsgeschwindigkeit des strömenden Mediums unterhalb von einem festgelegten Geschwindigkeitsgrenzwert liegt.

Hierzu wird die Laufzeitdifferenz von dem ersten Teilmesssignal, das in Strömungsrichtung ausgesendet wird und dem zweiten Teilmesssignal, das entgegen der Strömungsrichtung ausgesendet wird, gebildet. Liegt diese Laufzeitdifferenz unter einem Laufzeitdifferenzgrenzwert, so liegt die Strömungsgeschwindigkeit des Mediums unter der festgelegten Geschwindigkeitsgrenzwert. Damit liegt also eine Prozesssituation vor, in der vorteilhaft ein Abgleich der Messwerte der unterschiedlichen Ultraschallwandler 8, 9, 10, 11 erfolgen kann.

In einem nächsten Schritt 14 wird ein Vergleichsparameter aus dem ersten Messsignal, das sich aus dem ersten Teilmesssignal und dem zweiten Teilmesssignal zusammensetzt, bestimmt. Im vorliegenden Ausführungsbeispiel ist der Vergleichsparameter die bereits bestimmte Laufzeitdifferenz zwischen dem ersten Teilmesssignal und dem zweiten Teilmesssignal. Ausgehend von der gemessenen Laufzeitdifferenz auf dem ersten Messpfad wird ein Erwartungswert für die Laufzeitdifferenz auf dem zweiten Messpfad bestimmt.

In einem nächsten Schritt 15 wird von dem dritten Ultraschallwandler 10 ein Teilmesssignal in Strömungsrichtung ausgesendet, das nach dem Durchlauf durch das Medium von dem vierten Ultraschallwandler 11 empfangen wird. Weiterhin sendet der vierte Ultraschallwandler 11 ein zweites Teilmesssignal aus, das nach dem Durchlauf durch das Medium von dem dritten Ultraschallwandler 10 empfangen wird.

Anschließend wird als Vergleichsparameter die Laufzeitdifferenz dieser Teilmessignale bestimmt 16.

Schließlich wird eine Plausibiliätsprüfung 17 durchgeführt. Im Detail wird überprüft, ob die Laufzeitdifferenz auf dem zweiten Messpfad der erwarteten Laufzeitdifferenz entspricht. Stimmt die gemessene Laufzeitdifferenz mit dem Erwartungswert unter Berücksichtigung eines Toleranzbereichs überein, so kann davon ausgegangen werden, dass die Ultraschallwandler 8, 9, 10, 11 korrekt messen.

Fig. 2 zeigt ein weiteres Ausführungsbeispiel eines Verfahrens 1 zum Betreiben eines Ultraschalldurchflussmessgeräts 2, wobei das Ultraschalldurchflussmessgerät 2 ein erstes Ultraschallwandlerpaar 3 aufweist, das derart an einem Messrohr 4 angeordnet ist, dass zwischen den Ultraschallwandlern 8, 9 des ersten Ultraschallwandlerpaars 3 ein erster Messpfad 5 aufgespannt wird und wobei das Ultraschalldurchflussmessgerät 2 ein zweites Ultraschallwandlerpaar 6 aufweist, das derart an dem Messrohr 4 angeordnet ist, das es einen zweiten Messpfad 7 aufspannt.

In einem ersten Schritt 12 des Verfahrens 1 wird von dem ersten Ultraschallwandler 8 des ersten Ultraschallwandlerpaars 3 ein erstes Teilmesssignal ausgesendet, das nach dem Durchlauf durch das Medium von dem zweiten Ultraschallwandler 9 empfangen wird. Weiterhin sendet der zweite Ultraschallwandler 9 ein zweites Teilmesssignal aus, dass nach dem Durchlauf durch das Medium von dem ersten Ultraschallwandler 8 empfangen wird.

In einem nächsten Schritt 13 wird bestimmt, ob die Strömungsgeschwindigkeit unterhalb von einem festgelegten Geschwindigkeitsgrenzwert liegt.

Hierzu wird die Laufzeitdifferenz von dem ersten Teilmesssignal, das in Strömungsrichtung ausgesendet wird und dem zweiten Teilmesssignal, das entgegen der Strömungsrichtung ausgesendet wird, gebildet. Liegt diese Laufzeitdifferenz unter einem Laufzeitdifferenzgrenzwert, so liegt die Strömungsgeschwindigkeit des Mediums unter der festgelegten Geschwindigkeitsgrenzwert. Im vorliegenden Ausführungsbeispiel beträgt die Strömungsgeschwindigkeit in der Prozesssituation, in der die Plausibilitätsprüfung durchgeführt wird Null.

In einem nächsten Schritt 14 wird ein Vergleichsparameter aus dem ersten Messsignal bestimmt. Im vorliegenden Ausführungsbeispiel ist der Vergleichsparameter die absolute Laufzeit des Teilmesssignals, das in Strömungsrichtung von dem ersten Ultraschallwandler 8 zu dem zweiten Ultraschallwandler 9 ausgesendet wird. Weiterhin wird aus dem ersten Vergleichsparameter ein Erwartungswert für den aus dem zweiten Messsignal bestimmten zweiten Vergleichsparameter bestimmt.

In einem nächsten Schritt 15 wird von dem dritten Ultraschallwandler 10 ein Teilmesssignal in Strömungsrichtung ausgesendet, das nach dem Durchlauf durch das Medium von dem vierten Ultraschallwandler 11 empfangen wird.

Aus dem Teilmessignal des zweiten Messsignals, das in Strömungsrichtung des strömenden Mediums ausgesendet wird, wird der zweite Vergleichsparameter, nämlich die absolute Laufzeit dieses Teilmesssignals bestimmt 16.

Schließlich wird eine Plausibiliätsprüfung 17 durchgeführt. Im Detail wird geprüft, ob der zweite auf dem zweiten Messpfad gemessene Wert des Vergleichsparameters mit seinem Erwartungswert übereinstimmt.

Sofern die absolute Laufzeit des Teilmesssignals des zweiten Messsignals der erwarteten Laufzeit unter Berücksichtigung eines Toleranzbereiches entspricht, ist davon auszugehen, dass die Ultraschallwandler 8, 9, 10, 11 korrekt funktionieren.

Zusätzlich zu der Analyse und dem Vergleich der Laufzeiten und/oder Laufzeitdifferenzen können auch weitere Parameter der Messsignale miteinander verglichen werden. Beispielsweise kann das Frequenzspektrum des zweiten empfangenen Messsignals mit dem Frequenzspektrum des ersten empfangenen Messsignals verglichen werden. Da das Frequenzspektrum keine Abhängigkeit von der Länge der Messpfade aufweist, entspricht der Erwartungswert des zweiten Frequenzspektrums dem Frequenzspektrum des ersten Messsignals

Zudem kann das Signal-zu-Rausch-Verhältnis des empfangenen zweiten Messsignals mit dem Signal-zu-Rausch-Verhältnis des empfangenen ersten Messsignals verglichen werden.

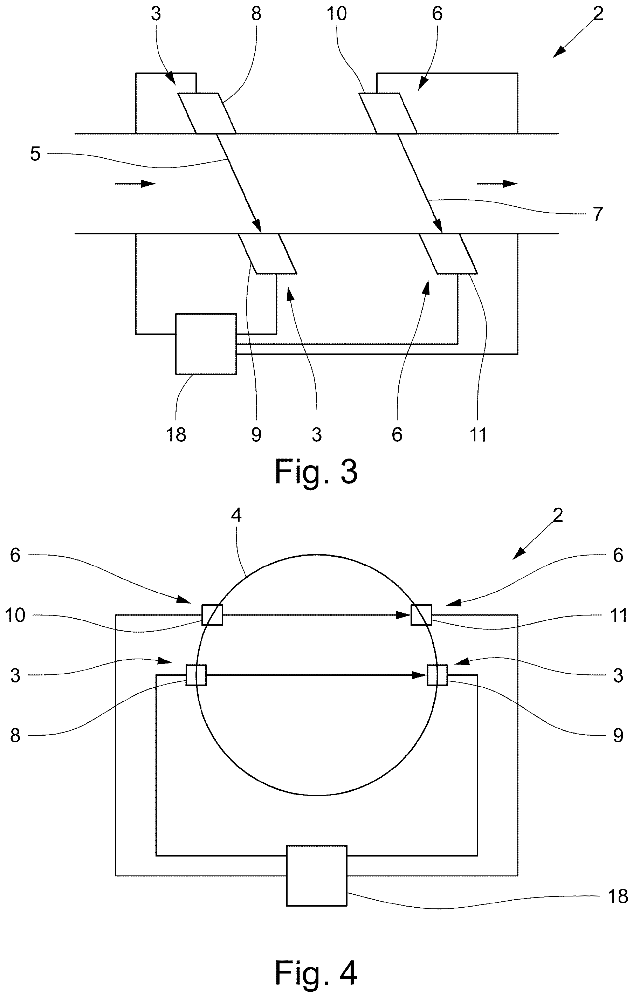

Fig. 3 zeigt ein Ausführungsbeispiel eines Ultraschalldurchflussmessgeräts 2, das zur Durchführung des erfindungsgemäßen Verfahrens 1 ausgebildet ist.

Das Ultraschalldurchflussmessgerät 2 weist ein erstes Ultraschallwandlerpaar 3 mit einem ersten Ultraschallwandler 8 und einem zweiten Ultraschallwandler 9 auf, wobei der erste Ultraschallwandler 8 und der zweite Ultraschallwandler 9 jeweils als Ultraschallsender und als Ultraschallempfänger ausgebildet sind, auf.

Das erste Ultraschallwandlerpaar 3 ist derart an einem Messrohr 4 angeordnet, dass der erste Ultraschallwandler 8 und der zweite Ultraschallwandler 9 einen ersten Messpfad 5 mit einer Länge L1 aufspannen.

Weiterhin weist das Ultraschalldurchflussmessgerät 2 ein zweites Ultraschallwandlerpaar 6 mit einem dritten Ultraschallwandler 10 und einem vierten Ultraschallwandler 11 auf, wobei der dritte Ultraschallwandler 10 und der vierte Ultraschallwandler 11 jeweils als Ultraschallsender und als Ultraschallempfänger ausgebildet sind, auf.

Das zweite Ultraschallwandlerpaar 6 ist derart an einem Messrohr 4 angeordnet, dass der dritte Ultraschallwandler 10 und der vierte Ultraschallwandler 11 einen zweiten Messpfad 7 mit einer Länge L2 aufspannen.

Im dargestellten Ausführungsbeispiel entspricht die Länge L1 im Wesentlichen der Länge L2. Die beiden Messsignale schneiden jeweils die Messrohrachse. Weiterhin sind die beiden Ultraschallwandlerpaare 3, 6 in Strömungsrichtung versetzt zueinander angeordnet.

Weiterhin weist das Ultraschalldurchflussmessgerät 2 eine Steuer- und Auswerteeinheit 18 zur Ansteuerung der Ultraschallwandler 8, 9, 10, 11 und zur Auswertung der von den Ultraschallwandlern 8, 9, 10, 11 aufgenommenen Messsignale auf. Die Steuer- und Auswerteeinheit 18 führt im Betrieb ein erfindungsgemäße Plausibilitätsverfahren 1 durch.

Wird im Betrieb festgestellt, dass keine oder fast keine Strömungsgeschwindigkeit vorhanden ist, das Medium im Messrohr 4 also ruht, wird der erfindungsgemäße Plausibilitätstest durchgeführt.

Dies weist den Vorteil auf, dass bei der erfindungsgemäßen Bestimmung des Erwartungswertes des Vergleichsparameters für den zweiten Messpfad keine Ungenauigkeit mit eingeht, die beispielsweise auf Turbulenzen im Strömungsprofil zurückzuführen ist.

Fig. 4 zeigt ein weiteres Ausführungsbeispiel eines Ultraschalldurchflussmessgeräts 2 zur Durchführung des erfindungsgemäßen Verfahrens 1 in Draufsicht auf den Messrohrquerschnitt.

Auch dieses Ausführungsbeispiel umfasst zwei Ultraschallwandlerpaare 3, 6, die an einem Messrohr 4 angeordnet sind. Im Unterschied zu dem in Fig. 3 gezeigten Ausführungsbeispiel sind die Ultraschallwandlerpaare 3, 6 in demselben Strömungsabschnitt angeordnet. Dabei schneidet der erste Messpfad 5 die Messrohrachse, der zweite Messpfad 7 ist oberhalb des ersten Messpfades 5 angeordnet. Der zweite Messpfad 7 erfasst also den oberen Bereich des strömenden Mediums.

In dem Fall, in dem festgestellt oder manuell vorgeben wird, dass keine oder fast keine Strömungsgeschwindigkeit vorhanden ist, können zur Überprüfung einer korrekten Funktionsweise der Ultraschallwandler 8, 9, 10, 11 Messwerte der Ultraschallwandler 8, 9, 10, 11 zumindest mittelbar miteinander verglichen werden.

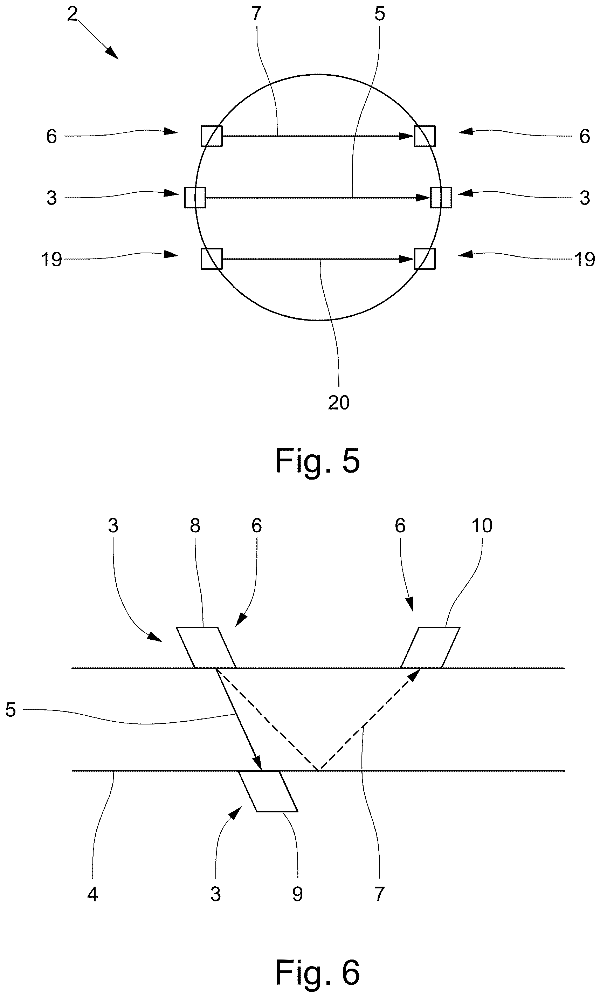

Fig. 5 zeigt ein weiteres Ausführungsbeispiel eines Ultraschalldurchflussmessgeräts 2, das zur Durchführung des erfindungsgemäßen Verfahrens 1 ausgebildet ist, wobei das Ultraschalldurchflussmessgerät 2 drei Ultraschallwandlerpaare 3, 6, 19 aufweist. Die drei Ultraschallwandlerpaare 3, 6, 19 sind in demselben Strömungsabschnitt übereinander angeordnet. Sie vermessen also unterschiedliche Bereiche des Strömungsprofils.

Wird auf dem ersten Messpfad 5 festgestellt, dass keine Strömungsgeschwindigkeit oder fast keine Strömungsgeschwindigkeit vorliegt, oder wird dies durch den Nutzer manuell vorgegeben, können ausgehend von dem auf dem ersten Messpfad 5 bestimmten Vergleichsparameter Erwartungswerte für den Vergleichsparameter des zweiten Messpfades 7 und des dritten Messpfades 20 bestimmt werden.

Stimmt der auf dem zweiten Messpfad 7 bestimmte Vergleichsparameter mit seinem Erwartungswert unter Berücksichtigung eines Toleranzbereichs überein und stimmt der auf dem dritten Messpfad 20 bestimmte Vergleichsparameter mit seinem Erwartungswert unter Berücksichtigung eines Toleranzbereichs überein, so kann davon ausgegangen werden, dass die Ultraschallwandler korrekt funktionieren.

Fig. 6 zeigt ein weiteres Ausführungsbeispiel eines Ultraschalldurchflussmessgeräts 2, das zur Durchführung des erfindungsgemäßen Verfahrens 1 ausgebildet ist. Im Unterschied zu den zuvor dargestellten Ausführungsbeispielen weisen sind zwei Ultraschallwandlerpaare 3, 6 vorhanden, die insgesamt drei Ultraschallwandler 8, 9, 10 aufweisen. Das erste Ultraschallwandlerpaar 3 wird gebildet aus dem ersten Ultraschallwandler 8 und dem zweiten Ultraschallwandler 9. Das zweite Ultraschallwandlerpaar 6 wird gebildet aus dem ersten Ultraschallwandler 8 und dem dritten Ultraschallwandler 10.

Der erste Ultraschallwandler 8 und der zweite Ultraschallwandler 9 sind gegenüberliegend am Messrohr 4 angeordnet. Der erste Messpfad 5 schneidet die Messrohrachse und trifft unmittelbar, also ohne eine Reflexion an der Messrohrinnenwand, auf den zweiten Ultraschallwandler 9. Der dritte Ultraschallwandler 10 ist in Draufsicht auf das Messrohr 4 auf derselben Seite angeordnet wie der erste Ultraschallwandler 8. Der zweite Messpfad 7 ist in der dargestellten Draufsicht V-förmig ausgebildet und umfasst somit eine Reflexion an der Messrohrinnenwand.

Der erste Ultraschallwandler 8 ist also derart ausgebildet, dass er sowohl auf den ersten Messpfad 5 als auch auf den zweiten Messpfad 7 aussendet. Hierzu ist der Ultraschallwandler 8 als Phased-Array-Wandler ausgebildet. Beispielsweise sendet der erste Ultraschallwandler 8 zu unterschiedlichen Zeitpunkten ein Messsignal auf den ersten Messpfad 5 und auf den zweiten Messpfad 7 aus.

Wird auf dem ersten Messpfad 5 festgestellt, dass keine Strömungsgeschwindigkeit oder fast keine Strömungsgeschwindigkeit vorliegt, oder wird dieser Zustand durch den Nutzer manuell vorgegeben, kann die Funktionsfähigkeit der Ultraschallwandler des zweiten Ultraschallwandlerpaars 6 durch den Vergleich eines auf dem zweiten Messpfad 7 erfassten Vergleichsparameter mit auf einem Erwartungswert, der basierend auf dem auf dem ersten Messpfad 5 bestimmten Vergleichparameter, überprüft werden.

### Bezugszeichen

- 1: Verfahren zum Betreiben eines Ultraschalldurchflussmessgeräts
- 2: Ultraschalldurchflussmessgerät
- 3: Erstes Ultraschallwandlerpaar
- 4: Messrohr
- 5: Erster Messpfad
- 6: Zweites Ultraschallwandlerpaar
- 7: Zweiter Messpfad
- 8: Erster Ultraschallwandler
- 9: Zweiter Ultraschallwandler
- 10: Dritter Ultraschallwandler
- 11: Vierter Ultraschallwandler
- 12: Aussenden und Empfang des ersten Messsignals
- 13: Bestimmung der Strömungsgeschwindigkeit
- 14: Bestimmung eines Vergleichsparameters
- 15: Aussenden und Empfang eines zweiten Messignals
- 16: Bestimmung eines zweiten Vergleichsparameters
- 17: Plausibilitätsprüfung
- 18: Steuer- und Auswerteeinheit
- 19: Drittes Ultraschallwandlerpaar

## Patentansprüche

1. Verfahren (1) zum Betreiben eines Ultraschalldurchflussmessgeräts (2),
wobei das Ultraschalldurchflussmessgerät (2) wenigstens ein erstes Ultraschallwandlerpaar (3) und ein zweites Ultraschallwandlerpaar (6) aufweist,
wobei das erste Ultraschallwandlerpaar (3) derart an einem Messrohr (4) angeordnet ist, dass zwischen den Ultraschallwandlern (8, 9) des ersten Ultraschallwandlerpaars (3) ein erster Messpfad (5) mit einer Länge L1 aufgespannt wird und
wobei das zweite Ultraschallwandlerpaar (6) derart an dem Messrohr (5) angeordnet ist, dass zwischen den Ultraschallwandlern (8, 10, 11) des zweiten Ultraschallwandlerpaars (6) ein zweiter Messpfad (7) mit einer Länge L2 aufgespannt wird,
und wobei das Ultraschalldurchflussmessgerät (2) eine Steuer- und Auswerteeinheit (18) zur Ansteuerung der Ultraschallwandler (8, 9, 10, 11) und zur Auswertung der von den Ultraschallwandlern (8, 9, 10, 11) erfassten Messsignale aufweist,
**dadurch gekennzeichnet,**
**dass** das Verfahren (1) die folgenden Schritte umfasst:
- Aussenden und Empfang (12) von zumindest einem ersten Messsignal entlang des ersten Messpfads (5) in und/oder entgegen der Strömungsrichtung eines durch das Messrohr (4) fließenden Mediums durch das erste Ultraschallwandlerpaar (3),
- Bestimmung (13), ob die Strömungsgeschwindigkeit des Mediums unterhalb von einem festgelegten Geschwindigkeitsgrenzwert liegt,
- Bestimmung (14) eines Werts von einen Vergleichsparameter aus dem ersten Messsignal und Bestimmung eines Erwartungswertes für den Vergleichsparameter auf dem zweiten Messpfad (7) basierend auf dem Wert des Vergleichsparameters, der auf dem ersten Messpfad bestimmt wurde,
- sofern die Strömungsgeschwindigkeit unterhalb von dem festgelegten Geschwindigkeitsgrenzwert liegt:
- Aussenden und Empfang (15) von zumindest einem zweiten Messsignal entlang des zweiten Messpfads (7) in und/oder entgegen der Strömungsrichtung eines durch das Messrohr fließenden Mediums durch das zweite Ultraschallwandlerpaar (6),
- Bestimmung (16) des zweiten Vergleichsparameters aus dem zweiten Messsignal,
- Plausibiliätsprüfung (17) durch Vergleich des zweiten Vergleichsparameters mit seinem Erwartungswert.

2. Verfahren (1) nach Anspruch 1, **dadurch gekennzeichnet, dass** das erste Messsignal ein erstes Teilmesssignal, das den ersten Messpfad (5) in Strömungsrichtung durchläuft und ein zweites Teilmesssignal, das den ersten Messpfad entgegen der Strömungsrichtung durchläuft, umfasst und dass zur Bestimmung, ob die Strömungsgeschwindigkeit unter dem Geschwindigkeitsgrenzwert liegt, die Laufzeitdifferenz zwischen dem ersten Teilmesssignal und dem zweiten Teilmesssignal bestimmt wird und dass überprüft wird, ob die Laufzeitdifferenz unter einem Differenzgrenzwert liegt.

3. Verfahren (1) nach Anspruch 1, **dadurch gekennzeichnet, dass** das erste Messsignal ein einfaches Messsignal ist, dass den ersten Messpfad in oder entgegen der Strömungsrichtung durchläuft und dass zur Bestimmung, ob die Strömungsgeschwindigkeit unter dem Geschwindigkeitsgrenzwert liegt, die absolute Laufzeit des ersten Messignals zwischen den Ultraschallwandlern (8, 9) des ersten Ultraschallwandlerpaars (3), gegen einen Laufzeitgrenzwert verglichen wird, wobei die Strömungsgeschwindigkeit unter dem Geschwindigkeitsgrenzwert liegt, wenn die absolute Laufzeit des ersten Messsignals einen unteren Laufzeitgrenzwert überschreitet oder einen oberen Laufzeitgrenzwert unterschreitet.

4. Verfahren (1) nach Anspruch 3, **dadurch gekennzeichnet, dass** das Ultraschalldurchflussmessgerät (2) zusätzlich einen Temperatursensor und/oder einen Drucksensor aufweist, wobei der Temperatursensor die Temperatur des Mediums misst und/oder wobei der Drucksensor den Druck im Medium misst und wobei der obere bzw. der untere Laufzeitgrenzwert abhängig ist von der aktuellen Temperatur und/oder dem aktuellen Druck des Mediums.

5. Verfahren (1) nach einem der Ansprüche 1 bis 4, **dadurch gekennzeichnet, dass** der Vergleichsparameter für die Plausibiliätsprüfung die absolute Laufzeit eines Messsignals zwischen zwei Ultraschallwandlern eines Ultraschallwandlerpaars ist.

6. Verfahren (1) nach einem der Ansprüche 1 bis 4, **dadurch gekennzeichnet, dass** der Vergleichsparameter die Laufzeitdifferenz zwischen einem einen Messpfad in Strömungsrichtung durchlaufenden Teilmesssignals und einem einen Messpfad entgegen der Strömungsrichtung durchlaufenden Teilmesssignals ist.

7. Verfahren (1) nach einem der Ansprüche 1 bis 6, **dadurch gekennzeichnet, dass** die Länge L1 des ersten Messpfades (5) um einen bekannten Wert größer oder kleiner ist als die Länge L2 des zweiten Messpfades (7), wobei bei der Bestimmung des Erwartungswertes des Vergleichsparameter für den zweiten Messpfad der Längenunterschied berücksichtigt wird.

8. Verfahren (1) nach einem der Ansprüche 1 bis 6, **dadurch gekennzeichnet, dass** die Länge L1 des ersten Messpfades (5) der Länge L2 des zweiten Messpfades (7) entspricht, sodass bei Vorliegen von keiner oder fast keiner Strömungsgeschwindigkeit der Erwartungswert des Vergleichsparameters für den zweiten Messpfad im Wesentlichen dem Wert des Vergleichsparameters für den ersten Messpfad entspricht.

9. Verfahren (1) nach einem der Ansprüche 1 bis 8, **dadurch gekennzeichnet, dass** wenigstens ein weiterer Vergleichsparameter das Frequenzspektrum des von einem Ultraschallwandler (8, 9, 10, 11) empfangenen Messsignals und/oder das Signal-zu-Rausch-Verhältnis des von einem Ultraschallwandler (8, 9, 10, 11) empfangenen Messsignals ist, und dass im Rahmen der Plausibilitätsprüfung der auf dem zweiten Messpfad bestimmte Wert des wenigstens einen weiteren Vergleichsparameters mit dem auf dem ersten Messpfad bestimmten Wert, der dem Erwartungswert entspricht, verglichen wird.

10. Ultraschalldurchflussmessgerät (2) umfassend wenigstens ein erstes Ultraschallwandlerpaar (3) und ein zweites Ultraschallwandlerpaar (6),
wobei das erste Ultraschallwandlerpaar (3) derart an einem Messrohr (4) angeordnet ist, dass zwischen den Ultraschallwandlern (8, 9) des ersten Ultraschallwandlerpaars (3) ein erster Messpfad (5) der Länge L1 aufgespannt wird und
wobei das zweite Ultraschallwandlerpaar (6) derart an dem Messrohr (4) angeordnet ist, dass zwischen den Ultraschallwandlern (8, 10, 11) des zweiten Ultraschallwandlerpaars (6) ein zweiter Messpfad (7) der Länge L2 aufgespannt wird,
und wobei das Ultraschalldurchflussmessgerät (2) eine Steuer- und Auswerteeinheit (18) zur Ansteuerung der Ultraschallwandler (8, 9, 10, 11) und zur Auswertung der von den Ultraschallwandlern (8, 9, 10, 11) erfassten Messsignale aufweist,
**dadurch gekennzeichnet,**
**dass** die Steuer- und Auswerteeinheit (18) im Betrieb ein Verfahren (1) nach einem der Ansprüche 1 bis 9 durchführt.

11. Ultraschalldurchflussmessgerät (2) nach Anspruch 10, **dadurch gekennzeichnet, dass** das erste Ultraschallwandlerpaar (3) einen ersten Ultraschallwandler (8) und einen zweiten Ultraschallwandler (9) aufweist und dass das zweite Ultraschallwandlerpaar (6) einen dritten Ultraschallwandler (10) und einen vierten Ultraschallwandler (11) aufweist, wobei vorzugsweise sämtliche Ultraschallwandler (8, 9, 10, 11) als Ultraschallsender und als Ultraschallempfänger ausgebildet sind.

12. Ultraschalldurchflussmessgerät (2) nach Anspruch 10 oder 11, **dadurch gekennzeichnet, dass** die Länge L1 des ersten Messpfades (5) der Länge L2 des zweiten Messpfades (7) entspricht.

13. Ultraschalldurchflussmessgerät (2) nach einem Ansprüche 10 oder 11, **dadurch gekennzeichnet, dass** die Länge L1 des ersten Messpfades (5) um einen bekannten Wert größer oder kleiner ist als die Länge L2 des zweiten Messpfades (7).

14. Ultraschalldurchflussmessgerät (2) nach einem der Ansprüche 10 bis 13, **dadurch gekennzeichnet, dass** das erste Ultraschallwandlerpaar (3) und das zweite Ultraschallwandlerpaar (6) in demselben Strömungsabschnitt angeordnet sind.

15. Ultraschalldurchflussmessgerät (2) nach einem der Ansprüche 10 bis 14, **dadurch gekennzeichnet, dass** wenigstens drei Ultraschallwandlerpaare (3, 6, 20) vorhanden sind, die im Betrieb zur Sicherstellung einer korrekten Funktionsweise einer Plausibilitätsprüfung unterzogen werden.
